# EUROPEAN PATENT SPECIFICATION

(11) **EP 0 772 831 B1**
(45) Date of publication and mention of the grant of the patent: **26.03.2003**
(21) Application number: 96920256.3
(22) Date of filing: 16.05.1996
(51) Int. Cl.: G06F 13/38

(54) **BIDIRECTIONAL PARALLEL SIGNAL INTERFACE**
BIDIREKTIONALE PARALLELSCHNITTSTELLE
INTERFACE BIDIRECTIONNELLE A SIGNAL PARALLELE

(30) Priority: 26.05.1995 US 452350
(43) Date of publication of application: 14.05.1997
(60) Divisional application: 02004713.0
(73) Proprietor: NATIONAL SEMICONDUCTOR CORPORATION, Santa Clara, CA 95051 (US)
(72) Inventor: BALLACHINO, William, E., Arlington, TX 76017 (US); COLGAN, James, A., Ichikawa-shi,Chiba-ken 272-01 (JP); IACOBELLI, Franco, Sunnyvale, CA 94087 (US)
(74) Representative: Horton, Andrew Robert Grant
(86) International application number: PCT/US96/07095
(87) International publication number: WO 96/037850

(56) References cited:
- EP-A- 0 367 284
- WO-A-94/18619
- US-A- 5 280 584

## Description

### Background of the Invention

### 1. Field of the Invention

The present invention relates to bidirectional parallel signal interfaces, and in particular, to bidirectional parallel signal interfaces between a computer and an external peripheral device.

### 2. Description of the Related Art

A number of signal interfaces for use between a computer and an external peripheral device are well-known in the art. One such interface is a bidirectional parallel signal interface for personal computers for which an industry standard has been developed and adopted. Such standard is known as the IEEE Standard 1284, dated December 2, 1994.

While the IEEE 1284 bidirectional parallel port standard is widely used in the industry, it nonetheless has a number of disadvantaged, relating primarily to the controlling of the data transfer rate between the computer and the peripheral device, susceptibility of the interface to interference from noise, and selective interruption of ongoing data transfers. Accordingly, it would be desirable to have an improved bidirectional parallel signal interface to address such problems,

EP 0367284 describes a reconfigurable port that selectively provides an interface between a computer and any one of several output devices requiring differing interface arrangements.

### SUMMARY OF THE INVENTION

According to the invention there is provided an apparatus including a bidirectional parallel signal interface for coupling to and providing a parallel data interface between a computer and a peripheral device external thereto, wherein said computer operates in a plurality of modes including a host mode where data is communicated from said computer to said peripheral device and a slave mode where data is communicated from said peripheral device to said computer, said parallel signal interface comprising: an interface circuit, including a plurality of registers, for coupling to a computer and communicating thereto and therefrom a plurality of commands and a first plurality of data, wherein said plurality of registers are for receiving, storing and outputting said plurality of commands; a storage circuit, coupled to said interface circuit, for coupling to a peripheral device and communicating thereto and therefrom second and third pluralities of data; a host mode controller, coupled to said interface circuit and said storage circuit, for receiving a first portion of said plurality of commands outputted by said plurality of registers and in accordance therewith controlling said communication of said second plurality of data from said storage circuit to said peripheral device, and for coupling to said peripheral device and communicating thereto and therefrom a first plurality of control signals; and a slave mode controller, coupled to said interface circuit and said storage circuit, for receiving a second portion of said plurality of commands outputted by said plurality of registers and in accordance therewith controlling said communication of said third plurality of data from said peripheral device to said storage circuit, and for coupling to said peripheral device and communicating thereto and therefrom a second plurality of control signals; characterised in that said communication of said second and third pluralities of data between said storage circuit and said peripheral device is effected in accordance with a plurality of data communication rates, and wherein said plurality of data communication rates are controlled by said host and slave mode controllers in accordance with said plurality of commands from said plurality of registers.

In accordance with one embodiment of the present invention, the communication of the second and third pluralities of data between the storage circuit and the peripheral device is effected in accordance with first and second data communication rates, and the first and second data communication rates are controlled by the host and slave mode controllers in accordance with the plurality of commands from the plurality of registers.

In accordance with another embodiment of the present invention, the communication of the first plurality of control signals by the host mode controller is responsive to a first portion of the first plurality of control signals and the communication of the second plurality of control signals by the slave mode controller is responsive to a second portion of the second plurality of control signals, and the responsiveness of the host mode controller and the responsiveness of the slave mode controller are controllable in accordance with the first and second portions of the plurality of commands, respectively.

In accordance with still another embodiment of the present invention, the communication of the second plurality of data from the storage circuit to the peripheral device is halted by the host mode controller in accordance with the first portion of the plurality of commands.

These and other features and advantages of the present invention will be understood upon consideration of the following detailed description of the invention and the accompanying drawings.

### BRIEF DESCRIPTION OF THE DRAWINGS

Figure 1 is a functional block diagram of an integrated circuit (IC) suitable for use with and which embodies a bidirectional parallel signal interface in accordance with the present invention.

Figure 2 is a functional block diagram identifying the input and output signals of the bidirectional parallel signal interface of Figure 1 in accordance with one embodiment of the present invention and illustrates the interconnections of such signals within the IC of Figure 1.

Figure 3 is a functional block diagram of the bidirectional parallel signal interface of Figure 2.

### DETAILED DESCRIPTION OF THE INVENTION

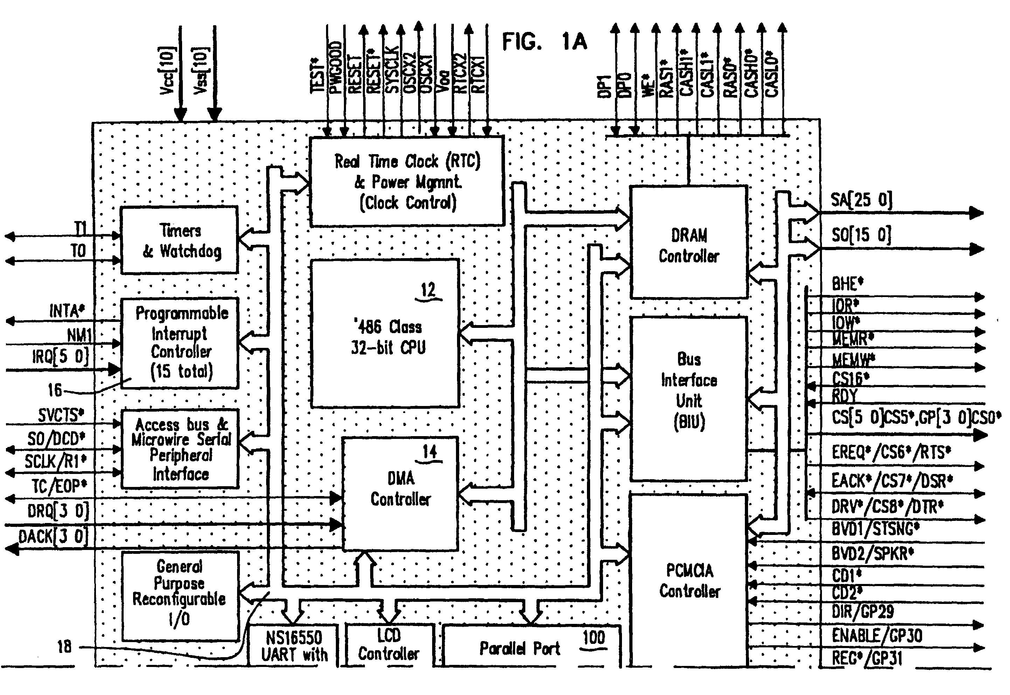

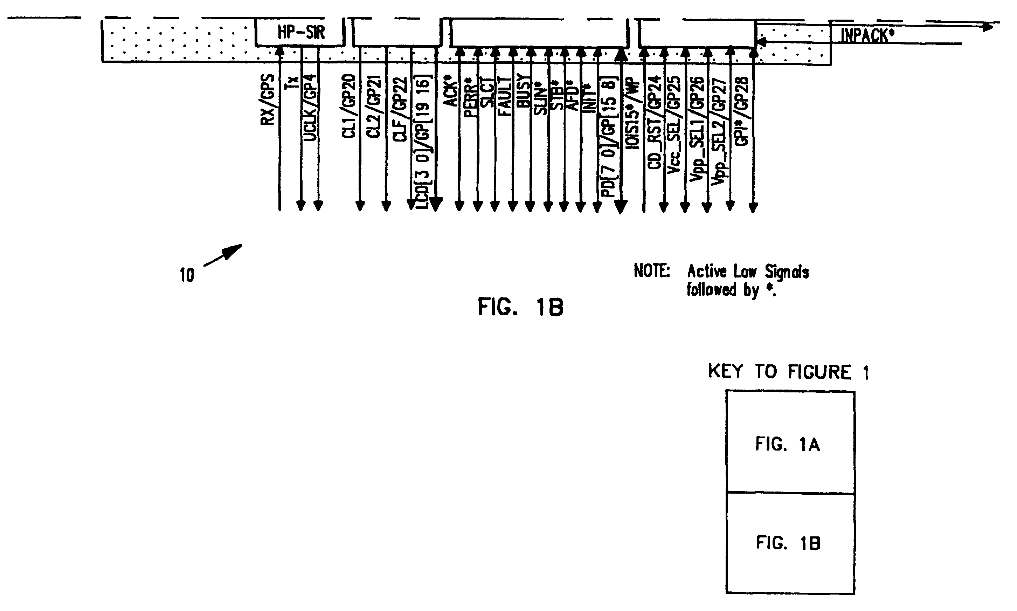

Referring to Figure 1, an IC 10 in which a bidirectional parallel signal interface 100 in accordance with the present invention has been implemented includes a number of additional functions integrated therein, including a microprocessor (CPU) 12, a DMA controller 14 and a programmable interrupt controller 16, all of which communicate with the bidirectional parallel signal interface 100 over an internal peripheral bus 18.

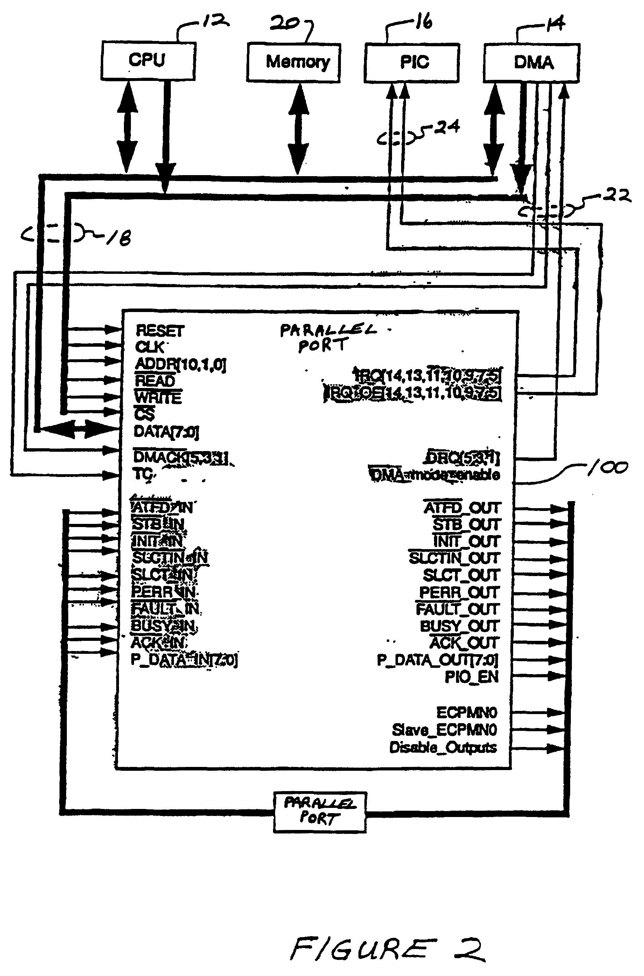

Referring to Figure 2, the input and output signals of the bidirectional parallel signal interface 100 of Figure 1 in accordance with one embodiment of the present invention provides exchanges signals (e.g. addresses, data, interrupts, etc.) over the internal peripheral bus 18 with the CPU 12, the DMA controller 14, the programmable interrupt controller 16 and some memory 20 resident within the IC 10. The bidirectional parallel signal interface 100 further exchanges some additional signals 22 with the DMA controller 14 and provides some interrupt signals 24 to the programmable interrupt controller 16.

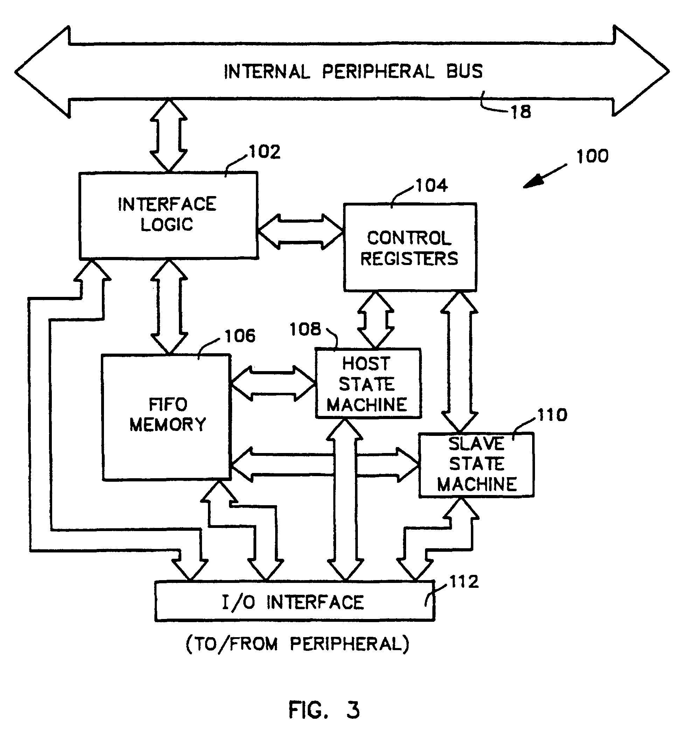

Referring to Figure 3, the bidirectional parallel signal interface 100 of Figure 2 includes some interface logic 102, a set 104 of control registers, a first-in, first-out (FIFO) memory 106, a host state machine 108, a slave state machine 110 and an input/output interface 112 (e.g. an electrical connector in conformance with the aforementioned IEEE 1284 Standard), all of which cooperate to provide parallel data communications between the host CPU 12 (via the internal peripheral bus 18) and an external peripheral device (not shown). The communications and interactions between these elements 102, 104, 106, 108, 110, 112 can be described as follows.

The bidirectional parallel signal interface 100 is a multifunction 8-bit parallel port that is compatible with the IEEE 1284 parallel port standard. The operation of the parallel port 100 is controlled by the content of the parallel port I/O control registers 104. The port 100 can operate in one of six modes: (1) a standard parallel port mode (Centronics compatible with a unidirectional data port); (2) a PS/2 compatible mode (same as compatible mode, but with bidirectional I/O lines); (3) a parallel port with FIFO mode that adds a FIFO and state machines for handling handshake signals; (4) the full Extended Capabilities Port (ECP) mode with state machines used for protocol and handshaking; (5) a configuration mode that permits access to special configuration registers that define the hardware implementation of interrupts (level vs. edge), and the steering of IRQ signals and the selection of DMA channels (ECP and parallel port with FIFO modes only); and (6) a test mode that makes the contents of the internal FIFOs accessible via a TFIFO register bypassing normal FIFO fill/empty control cycles.

The performance of the port 100 is determined by the mode selected. The standard or Centronics compatible mode and the PS/2 mode support data transfers in the range of 60-150 kbytes/second. These are software limited modes where typically the CPU must respond to an interrupt on every data byte sent or received.

The parallel port with FIFO mode improves performance by limiting the interrupt to the CPU 12 to one every 8-16 bytes. Data is stored in the on-chip 16-byte FIFO memory 106 and handshake signals flag the CPU 12 only when the buffer 106 is full. In addition, a DMA access can be used to directly access the FIFO buffers 106, further reducing CPU 12 overhead.

The full ECP mode is also a high performance mode. It uses the internal FIFO memory 106 and state machine logic 108, 110 to enable the transfer of data using the DMA controller 14 for high speed data transfer rates, with minimum CPU 12 intervention. The ECP mode uses an asynchronous handshake, allowing devices to operate as fast or as slow as needed. The timing specification of the ECP mode is designed to allow a 2 Mbyte/second transfer rate over a 15-foot cable. A shorter cable will result in a higher bandwidth. A longer cable will slow down the transfer, but in a non-destructive manner. The parallel port 100 can support both Host and Slave modes making the parallel port 100 a versatile I/O controller.

The bidirectional parallel signal interface 100 can operate as an interface between a Host CPU 12 and a parallel port connector 112 as might be the case for a PC application (Host function). This port 100 can also operate as an interface between a parallel port connector 112 and a peripheral CPU as would be the case in a printer (Slave function). These two modes are referred to herein as Host mode and Slave mode.

The direction of transfer is referred to with respect to the flow of data across the parallel port cable. Forward direction refers to transfers where data flows from the Host to the Slave, while Reverse direction refers to transfers where data flows from the Slave to the Host. Notice that for the ECP port, both the Host-Forward direction and Slave-Reverse directions have the parallel port data pins driven by this block.

The ECP mode also implements a simple 128:1 data compression scheme. Single byte run length encoding (RLE) compresses strings of identical bytes. When a run-length count is received, the subsequent data byte is replicated the specified number of times. The ECP mode also supports a channel addressing scheme that provides for 128 channel addresses. Channel addresses can be changed dynamically and the default address is zero.

The parallel port provides for 17 mandatory and two optional signal lines. The 17 mandatory signal lines can be divided into three sets: eight data, five status and four control. The data lines are written or read as a single I/O port (Data Register) as are the status lines (Device Status Register) and control lines (Device Control Register). Each register has a separate I/O address location accessed by a combination of a base I/O map address (0278h, 0378h or 03BCh) plus an offset value.

Because the parallel port has multiple functions, some setup and control registers have been added to the standard data, status and control registers (discussed in more detail below). These include five setup registers; the Extended Control Register (ECR) that sets the operating mode and controls interrupt and DMA operations; and two Configuration Registers that control the steering of IRQ and DMA signals. These registers and their addresses are defined in the table on the next page.

The parallel port also includes a 16-byte FIFO that can be configured for either direction, command/data FIFO tags (one per byte), a FIFO threshold interrupt for both directions, FIFO empty and full status bits, automatic generation of strobes (by hardware) to fill or empty the FIFO, transfer of commands and data, and a Run Length Encoding (RLE) decompression as explained later in this chapter. Like the data, status and control registers, the FIFO has its own register in the ECP control block, accessed through the base address and an offset. However, since the FIFO can be used in different modes, there are different register names for each type of FIFO access.

The AFIFO, CFIFO, DFIFO and TFIFO registers access the same FIFO. The FIFO is accessed at Base +000h, or Base +400h, depending on the mode field of ECR (bits 7-5) and the direction bit (bit 5) in the DCR. The FIFO can be accessed by Host DMA cycles, as well as Host Port I/O (PIO) cycles.

When DMA is configured and enabled (bit 3 of ECR is 1 and bit 2 of ECR is 0), the ECP automatically (by hardware) issues DMA requests to fill the FIFO (in Host-Forward mode (bit 5 of DCR is 0), or Slave-Reverse mode (bit 5 of DCR is 1)) or to empty the FIFO (in Host-Reverse mode (bit 5 of DCR is 1), or Slave-Forward mode (bit 5 of DCR is 0)). All DMA transfers are to or from these registers. The parallel port stops requesting DMA when Terminal Count (TC) is detected during an ECP DMA cycle.

Writing to a full FIFO, and reading from an empty FIFO, are ignored. The written data is lost, and the read data is undefined. The FIFO Empty and Full status bits are not affected by such accesses.

The parallel port operates in different phases, changing from one phase to another based on the state of the bits in the setup and control registers. All operating modes begin with Compatibility mode. In this mode, the parallel port is in Centronics compatible mode and performs host to printer data transfers. The parallel port starts a negotiation phase from the Compatible mode. The Negotiation phase begins with the host initiating a handshaking sequence with the attached peripheral to determine the highest level of compatibility that can be supported.

After a successful negotiation, the parallel port enters the Setup phase and configures its resources to support the appropriate level. For example, if after setup the paralle port is configured in ECP mode, the parallel port enters the Forward phase and data transfers commence. In the Forward phase, the parallel port may switch from Forward to Reverse allowing bidirectional transfers. A Termination phase ends the ECP mode transfer and the port reverts back to Compatible mode. (This procedure is fully documented in the aforementioned IEEE P1284 Standard.)

Table 1 below identifies the control registers 104 in the bidirectional parallel signal interface 100.

**TABLE 1:**

| ECP REGISTERS | | | | | |
|---|---|---|---|---|---|
| **Name** | **Address** | **I/O** | **Size** | **Mode #ECR (5-7)** | **Function** |
| DATAR | Base + 000h | R/W | byte | 000,001 | Port Data Register |
| AFIFO | Base + 000h | W | byte | 011 | ECP Address FIFO |
| DSR | Base + 001h | R | byte | ALL | Device Status Register |
| DCR | Base + 002h | R/W | byte | ALL | Device Control Register |
| INDEX | Base + 403h | R/W | byte | ALL | Index Register |
| CFIFO | Base + 400h | W | byte | 010 | Parallel Port Data FIFO |
| DFIFO | Base + 400h | R/W | byte | 011 | ECP Data FIFO |
| TFIFO | Base + 400h | R/W | byte | 110 | Test FIFO |
| CNFGA | Base + 400h | R/W | byte | 111 | Configuration Register A |
| CNFGB | Base + 401h | R/W | byte | 111 | Configuration Register B |
| ECR | Base + 402h | R/W | byte | ALL | Extended Control Register |
| SETUP | Base + 404 | R/W | byte | ALL | Setup Registers |
| ASR | Base + 405 | R/W | byte | ALL | Auxiliary Status Register |
| Base address is 278h, 378h or 3BCh | | | | | |

Some registers are not accessible in all modes of operation, or may be accessed in one direction only. Accessing a nonaccessible register has no effect: Data read is undefined, data written is ignored, and the FIFO does not update. Software operation is detailed in Section 3 of a document entitled "Extended Capabilities Port Protocol and ISA Interface Standard." However, the functions necessary to setup the ECP block prior to normal operations are not specified. Setup functions required for this block are derived from the following discussion: (1) The software must setup the ECP block using the Setup Registers, prior to enabling; (2) After ECP setup, the software should enable the ECP block using Setup Register offset 0. bit 0=0; (3) When the ECP block is enabled, and the software wishes to switch modes, it should switch only through Standard Parallel Port or PS/2 modes (ECR bits 7-5 = 000 or 001); (4) When the ECP block is enabled, the software should change direction only in PS/2 mode, or the Idle-Phase in ECP mode (ECR bits 7-5 = 001); (5) The software should switch from Parallel Port FIFO mode (ECR bits 7-5 = 010), or ECP mode (ECR bits 7-5 = 011), to Standard Parallel Port, or PS/2 mode (000 or 001), only when the FIFO is empty; (6) The user software should switch to ECP mode when bits 0 and 1 of DCR are 0 (The $\overline{\text{ATFD}}$ signal and the $\overline{\text{STB}}$ signal are controlled by ECP hardware and software when these bits are set to 0.); (7) The user software should switch to Parallel Port FIFO mode when only bit 0 of DCR is 0 (This puts control of the $\overline{\text{STB}}$ signal under the control of the ECP hardware and software. The Parallel Port FIFO mode is for Forward transfers only.); and (8) The software should disable the ECP port only when in Standard Parallel Port or PS/2 mode.

In Host mode, software may switch from ECP mode Reverse direction to Standard Parallel Port or PS/2 mode when there is an on-going ECP cycle. In this case the read cycle is aborted by deasserting $\overline{\text{ATFD}}$. The FIFO is reset (empty) and a potential data decompression (RLE) is automatically terminated since the new mode is Standard Parallel Port or PS/2 mode. This should be done carefully, however, as changing from Reverse ECP transfers to Standard Parallel Port mode may cause contention on the parallel port data lines.

Throttle (data rate) control (implemented via the DMA max burst size and DRQ de-assertion). In an ISA-based implementation, the ECP bandwidth is more than what the ISA 8-bit DMA can handle. Therefore, without a means of controlling the ECP data rate, the ISA bus would be monopolized by the ECP DMA.

Filtering on ACK and BUSY as well as STB/ and AFD. When high speed data transfers are taking place in ECP mode, there is an increase in sensitivity to noise and crosstalk in the cable. If the cable is not IEEE1284 compliant, the error rate may reach unacceptable levels.

Level Interrupts: When several source of interrupts are enabled, interrupts can be missed if pulse mode is used. Level mode interrupts are the solution to this problem. In addition, level interrupt support is required in non-PC related applications.

### REGISTERS NOT INCLUDED IN THE ISA IMPLEMENTATION STANDARD

1. Index register: The address for this register is: Base address + 403.
2. Setup register: The address for this register is: Base address + 404.
3. Setup register-base, offset 0: The first register, at offset 0, is as follows. Upon reset, GL_IEN is set to 1, all other bits are set to 0. 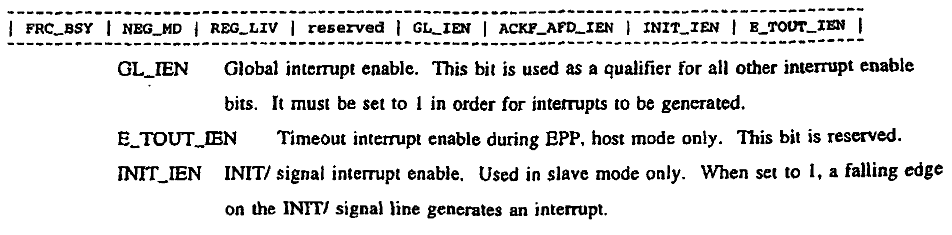 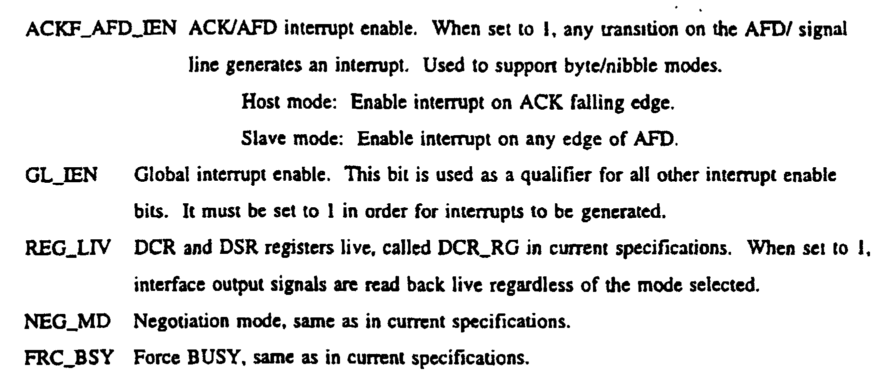
4. Setup register-base, offset 1: This is the second register, at offset 1, and is as follows. Upon reset, all bits are set to 0. 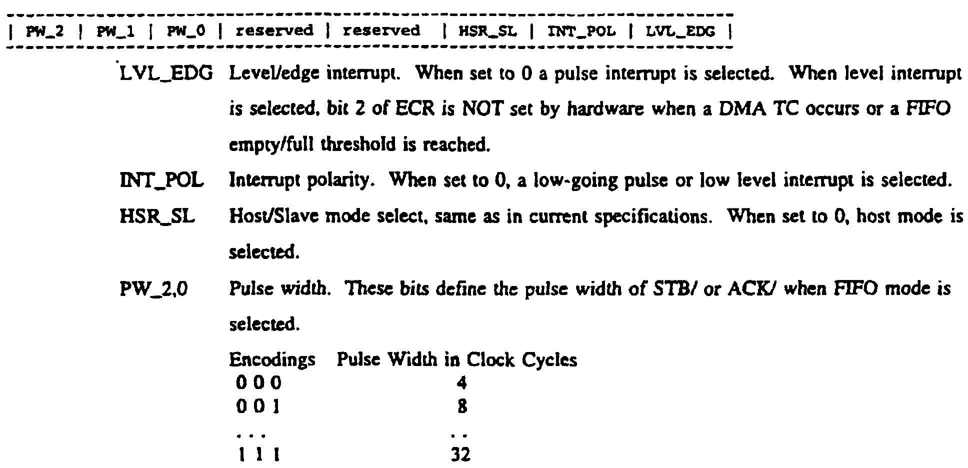
5. Setup register-base, offset 2: This is the third register, at offset 2, and is as follows. The bits in this register are implemented in a global register outside of the 1284 module. This is the case of a SIO including several modules. This is required to simplify the power management task. Upon reset, all bits are set to 0. 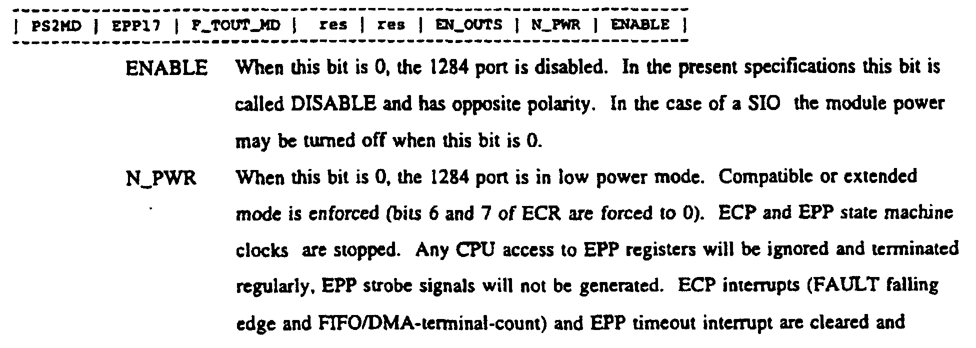 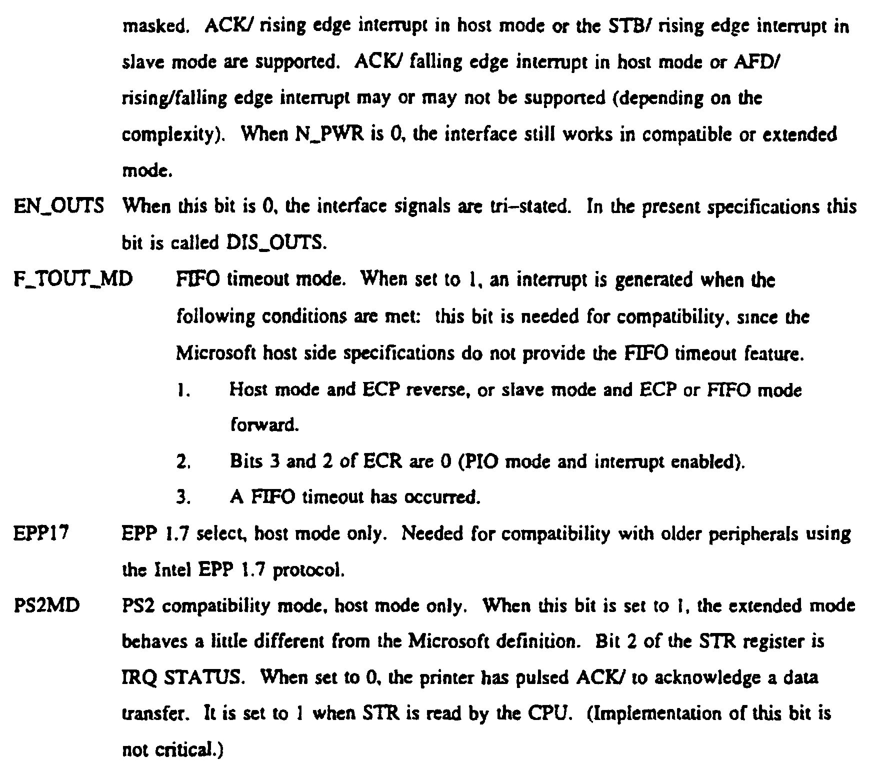
   The registers at offsets 1, 2, 3 and 4 can be reduced to the following two registers:
6. Setup register, offset 3: 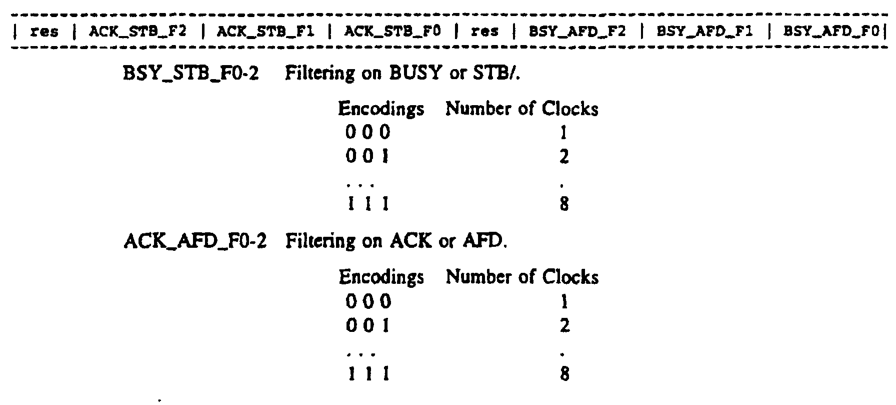
7. Setup register, offset 4: 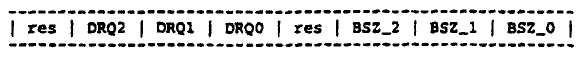 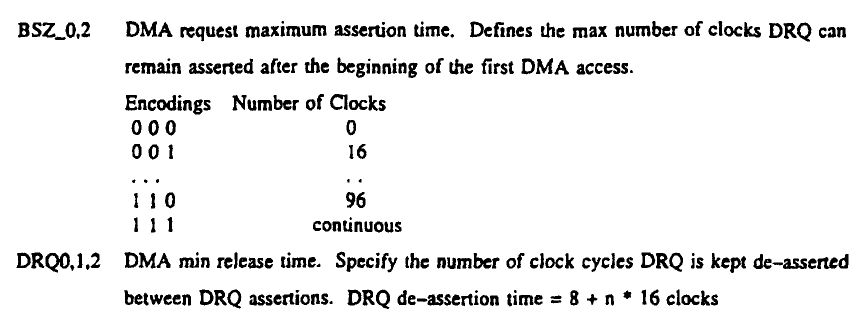
10. An auxiliary status register is added at address 405. This register is used to acknowledge and clear pending interrupts when level interrupt mode is selected. It can be also used to easily determine the interrupt source(s) for both pulse and level interrupts. The format is as follows. The bits of this register are set whenever the corresponding events occur regardless of the setting of the corresponding interrupt enable bits. 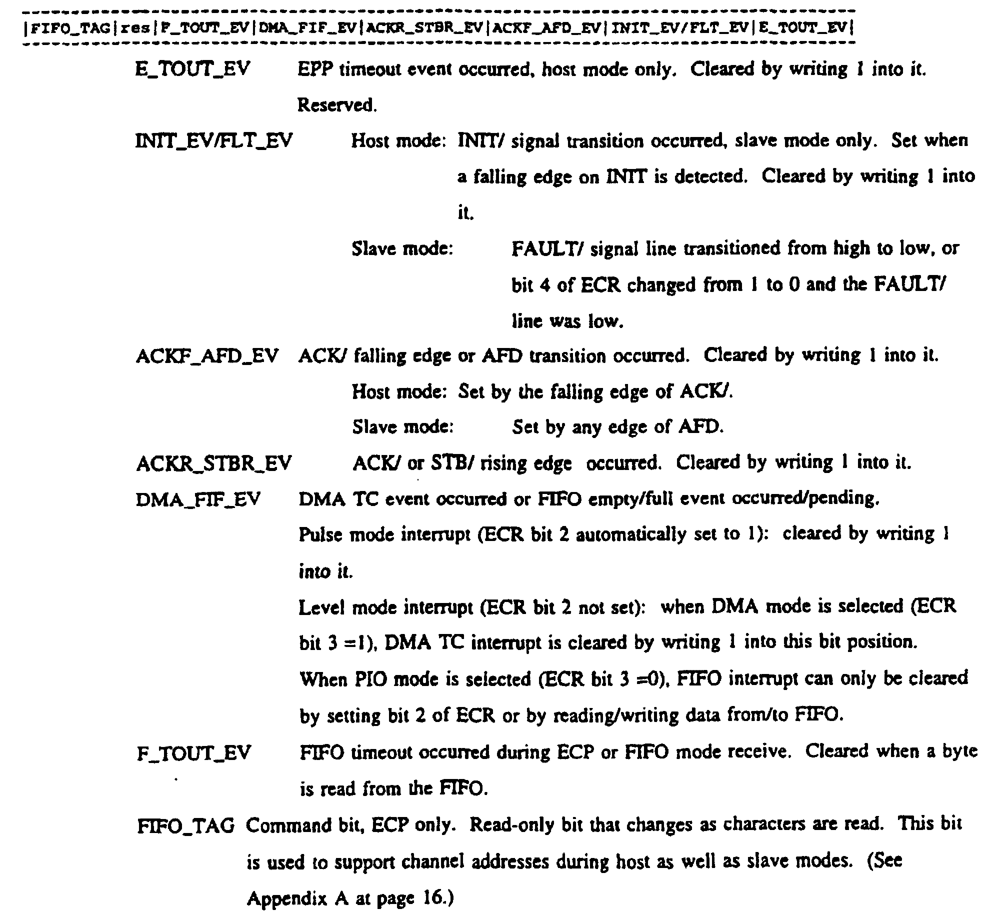 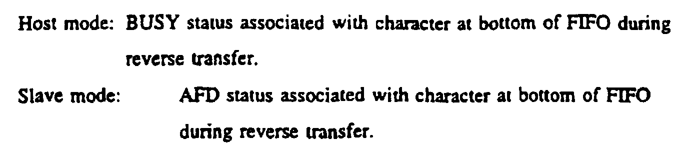
12. IRQ service bit: This bit is automatically set by hardware upon the occurrence of an interrupt only when pulse interrupt are selected. This is done to change a level-type source, like the FIFO empty/full into a pulse interrupt. It is not automatically set by the hardware when level mode interrupts are selected. The IRQ service bit is a mask bit, and in this case the software would set it to mask the interrupt off if it decided to delay servicing it.

### INTERRUPTS:

There are 7 interrupt sources in a host port, and 7 sources in a slave port. Some sources are 'level type' others are 'pulse type'. In what follows they will be marked as 'LVL' and 'PLS' respectively. In a 'pulse type' source the active interrupt-generating condition lasts only a short time, like a signal edge, DMA TC, etc. In a 'level type' source instead, the interrupt-generating condition persists until the condition is removed. This is the case, for example, of a data FIFO empty/full condition. The CPU interrupt can be programmed as 'level type' or 'pulse type', independently of the source type(s).

When a source interrupt condition is reached, the associated event flag is set. If the associated interrupt is enabled, an internal interrupt signal is activated. If a 'pulse type' interrupt is selected, a pulse is generated on the external interrupt line and the internal interrupt signal is cleared. If interrupts are globally masked (GL_IEN = 0), the internal interrupt signal remains active and no external interrupt is generated until GL_IEN is set to 1 by the CPU. When an external interrupt pulse is generated, any additional interrupt condition occurring within 20 microseconds of the pulse will not generate another pulse. However, the associated internal interrupt signal will be cleared. If 'level type' interrupts are selected, the internal interrupt signals associated to the various sources are simply ORed together to generate the composite external interrupt signal. For proper operation, when a mode is selected, only the sources relevant to that mode are enabled to generate an interrupt; the others are disabled.

### INTERRUPT SOURCES FOR A HOST PORT:

1. FIFO level below threshold during transmit, or FIFO level equal or above threshold during receive (LVL):
   ECP mode, and ECR bit 3 clear.
   A FIFO condition is cleared when the CPU reads or writes bytes from/to the FIFO.
   Pulse type CPU interrupt selected:
   When this condition is met and ECR bit 2 is 0, the DMA_FIF_EV bit in the auxiliary status register is set to 1, an interrupt pulse is generated, and the ECR bit 2 is automatically set to 1 by the hardware, masking the interrupt condition. This is a common method to clear an interrupt condition from a 'level type' interrupt source and generate an interrupt pulse.
   When this condition is met and ECR bit 2 is 1, the DMA_FIF_EV bit in the auxiliary status register is set to 1.
   If this condition is pending, and ECR bit 2 is changed by the CPU from 1 to 0, an interrupt pulse is generated, and the ECR bit 2 is set to I again by the hardware.
   The DMA_FIF_EV bit is cleared when the FIFO condition is cleared. It will not be cleared by writing 1 into it.
   Level type CPU interrupt selected:
   When this condition is met, the DMA_FIF_EV bit in the auxiliary status register is set to 1, and an interrupt is generated.
   When this condition is met and ECR bit 2 is 1, the DMA_FIF_EV bit in the auxiliary status register is set to 1.
   If this condition is pending, and ECR bit 2 is changed by the CPU from 1 to 0, an interrupt is generated.
   The DMA_FIF_EV bit is cleared when the FIFO condition is cleared. It will not be cleared by writing 1 into it.
   This interrupt can only be cleared by clearing the FIFO condiuon or by setting ECR bit 2 (mask bit).
2. FIFO timeout during receive, (if implemented) (LVL):
   ECP reverse (receive) mode, and ECR bit 3 clear.
   Even if a timeout in general is a 'pulse type' condition, in this case it can be considered as a 'level type' since, once the FIFO timeout has occurred, the interrupt is not cleared by simply acknowledging it. The CPU needs to clear the condition in the same fashion as it clears a FIFO empty/full condition.
   A FIFO timeout is generated when there is at least one byte in the FIFO, the level is below the threshold, and there has been no new byte received and no CPU read cycle from the FIFO or 10 microseconds.
   A timeout condition is cleared when the CPU reads a byte from the FIFO.
   Pulse type CPU interrupt selected:
   When this condition is met and ECR bit 2 is 0, the F_TOUT_EV and DMA_FIF_EV bits in the auxiliary status register are set to 1, an interrupt pulse is generated, and the ECR bit 2 is set to 1 by the hardware.
   When this condition is met and ECR bit 2 is 1, the F_TOUT_EV and DMA_FIF_EV bits in the auxiliary status register are set to 1.
   If this condition is pending. and ECR bit 2 is changed by the CPU from 1 to 0, an interrupt pulse is generated, and the ECR bit 2 is set to 1 again by the hardware.
   The F_TOUT_EV bit is only cleared when the timeout condition is cleared. It will not be cleared by writing 1 into it.
   The DMA_FIF_EV bit is cleared when the timeout condition is cleared and if the FIFO level is below the threshold. It will not be cleared by writing 1 into it.
   Level type CPU interrupt selected:
   When this condition is met, the F_TOUT_EV and DMA_FIF_EV bits in the auxiliary status register are set to 1, and an interrupt is generated.
   When this condition is met and ECR bit 2 is 1, the F_TOUT_EV and DMA_FIF_EV bits in the auxiliary status register are set to 1.
   If this condition is pending, and ECR bit 2 is changed by the CPU from 1 to 0, an interrupt is generated.
   The F_TOUT_EV bit is only cleared when the timeout condition is cleared. It will not be cleared by writing 1 into it.
   The DMA_FIF_EV bit is cleared when the timeout condition is cleared and if the FIFO level is below the threshold. It will not be cleared by writing 1 into it.
   This interrupt can only be cleared by clearing the timeout condition or by setting ECR bit 2 (mask bit).
3. DMA terminal count (TC) (PLS):
   ECP mode or FIFO (transmit) mode, ECR bit 3 set.
   Pulse type CPU interrupt selected:
   When this condition occurs and ECR bit 2 is 0, the DMA_FIF_EV bit in the auxiliary status register is set to 1, an interrupt pulse is generated, and the ECR bit 2 is set to 1 by the hardware.
   When this condition occurs and ECR bit 2 is 1, the DMA_FIF_EV bit in the auxiliary status register is set to 1.
   The DMA_FIF_EV bit is cleared by writing 1 into it.
   Level type CPU interrupt selected:
   When this condition occurs, the DMA_FIF_EV bit in the auxiliary status register is set to 1, and an interrupt is generated.
   When this condition occurs and ECR bit 2 is 1, the DMA_FIF_EV bit in the auxiliary status register is set to 1.
   The DMA_FIF_EV bit as well as the interrupt are cleared by writing 1 into the DMA_FIF_EV bit position.
4. ACK/ rising edge. (PLS):
   Compatible, nibble, byte and EPP modes.
   When an ACK/ rising edge is detected and DCR bit 4 is 1, the ACKR_STBR_EV bit in the auxiliary register is set to 1 and an interrupt is generated.
   When an ACK/ rising edge is detected and DCR bit 4 is 0, the ACKR_STBR_EV bit in the auxiliary register is set to 1.
   The ACKR_STBR_EV bit is cleared by writing 1 into it. If CPU 'level type' interrupt is selected, this operation will also clear the interrupt.
5. ACK/ falling edge (PLS):
   Nibble and byte modes.
   When an ACK/ falling edge is detected and the ACKF_AFD_IEN bit in the setup register at offset 0 is 1, the ACKF_AFD_EV bit in the auxiliary register is set to I and an interrupt is generated.
   When an ACK/ falling edge is detected and the ACKF_AFD_IEN bit in the setup register at offset 0 is 0, the ACKF_AFD_EV bit in the auxiliary register is set to 1.
   The ACKF_AFD_EV bit is cleared by writing 1 into it. If CPU 'level type' interrupt is selected, this operation will also clear the interrupt.
6. EPP Timeout (PLS):
   EPP mode.
   An EPP timeout occurs when the CPU accesses the peripheral and there is no acknowledge from the peripheral for 10 microseconds.
   When a timeout occurs and bit E_TOUT_IEN of the setup register at offset 0 is 1, the E_TOUT_EV bit in the auxiliary status register is set to 1 and an interrupt is generated.
   When a timeout occurs and bit E_TOUT_IEN of the setup register at offset 0 is 0, the E_TOUT_EV bit in the auxiliary status register is set to 1.
   The E_TOUT_EV bit is cleared by writing I into it. If CPU 'level type' interrupt is selected, this operation will also clear the interrupt.
7. FAULT/ falling edge (PLS):
   ECP mode.
   When a FAULT/ falling edge occurs and ECR bit 4 is 0, or ECR bit 4 is changed from 1 to 0 and FAULT/ is low, the INIT_EV/FLT_EV bit in the auxiliary status register is set to I and an interrupt is generated.
   When a FAULT/ falling edge occurs and ECR bit 4 is 1, the INIT_EV/FLT_EV bit is set to 1 and no interrupt is generated.
   The INIT_EV/FLT_EV bit is cleared by writing 1 into it. If CPU 'level type' interrupt is selected, this operation will also clear the interrupt.

### INTERRUPT SOURCES FOR A SLAVE PORT:

1. FIFO level below threshold during transmit, or FIFO level equal or above threshold during receive (LVL):
   ECP mode, and ECR bit 3 clear.
   A FIFO condition is cleared when the CPU reads or writes bytes from/to the FIFO.
   Pulse type CPU interrupt selected:
   When this condition is met and ECR bit 2 is 0, the DMA_FIF_EV bit in the auxiliary status register is set to 1, an interrupt pulse is generated, and the ECR bit 2 is set to 1 by the hardware.
   When this condition is met and ECR bit 2 is 1, the DMA_FIF_EV bit in the auxiliary status register is set to 1.
   If this condition is pending, and ECR bit 2 is changed by the CPU from 1 to 0, an interrupt pulse is generated, and the ECR bit 2 is set to 1 again by the hardware.
   The DMA_FIF_EV bit is cleared when the FIFO condition is cleared. It will not be cleared by writing 1 into it.
   Level type CPU interrupt selected:
   When this condition is met, the DMA_FIF_EV bit in the auxiliary status register is set to 1, and an interrupt is generated.
   When this condition is met and ECR bit 2 is 1, the DMA_FIF_EV bit in the auxiliary status register is set to 1.
   If this condition is pending, and ECR bit 2 is changed by the CPU from 1 to 0, an interrupt is generated.
   The DMA_FIF_EV bit is cleared when the FIFO condition is cleared. It will not be cleared by writing 1 into it.
   This interrupt can only be cleared by clearing the FIFO condition or by setting ECR bit 2 (mask bit).
2. FIFO timeout during receive, (if implemented) (LVL):
   ECP or FIFO forward (receive) mode, and ECR bit 3 clear.
   A timeout condition is cleared when the CPU reads a byte from the FIFO.
   Pulse type CPU interrupt selected:
   When this condition is met and ECR bit 2 is 0, the F_TOUT_EV and DMA_FIF_EV bits in the auxiliary status register are set to 1, an interrupt pulse is generated, and the ECR bit 2 is set to 1 by the hardware.
   When this condition is met and ECR bit 2 is 1, the F_TOUT_EV and DMA_FIF_EV bits in the auxiliary status register are set to 1.
   If this condition is pending, and ECR bit 2 is changed by the CPU from 1 to 0, an interrupt pulse is generated, and the ECR bit 2 is set to 1 again by the hardware.
   The F_TOUT_EV bit is only cleared when the timeout condition is cleared. It will not be cleared by writing 1 into it.
   The DMA_FIF_EV bit is cleared when the timeout condition is cleared and if the FIFO level is below the threshold. It will not be cleared by writing 1 into it.
   Level type CPU interrupt selected:
   When this condition is met, the F_TOUT_EV and DMA_FIF_EV bits in the auxiliary status register is set to 1, and an interrupt are generated.
   When this condition is met and ECR bit 2 is 1, the F_TOUT_EV and DMA_FIF_EV bits in the auxiliary status register are set to 1.
   If this condition is pending, and ECR bit 2 is changed by the CPU from 1 to 0, an interrupt is generated.
   The F_TOUT_EV bit is only cleared when the timeout condition is cleared. It will not be cleared by writing 1 into it.
   The DMA_FIF_EV bit is cleared when the timeout condition is cleared and if the FIFO level is below the threshold. It will not be cleared by writing 1 into it.
   This interrupt can only be cleared by clearing the timeout condition or by setting ECR bit 2 (mask bit).
3. DMA terminal count (TC) (PLS):
   ECP mode or FIFO (receive) mode, ECR bits 3 set.
   Pulse type CPU interrupt selected:
   When this condition occurs and ECR bit 2 is 0, the DMA_FIF_EV bit in the auxiliary status register is set to 1, an interrupt pulse is generated, and the ECR bit 2 is set to 1 by the hardware.
   When this condition occurs and ECR bit 2 is 1, the DMA_FIF_EV bit in the auxiliary status register is set to 1.
   The DMA_FIF_EV bit is cleared by writing 1 into it.
   Level type CPU interrupt selected:
   When this condition occurs, the DMA_FIF_EV bit in the auxiliary status register is set to 1, and an interrupt is generated.
   When this condition occurs and ECR bit 2 is 1, the DMA_FIF_EV bit in the auxiliary status register is set to 1.
   The DMA_FIF_EV bit as well as the interrupt are cleared by writing 1 into the DMA_FIF_EV bit position.
4. STR/ rising edge (PLS):
   Compatible, mode.
   When an STR/ rising edge is detected and DCR bit 4 is 1, the ACKR_STBR_EV in the auxiliary status register is set to 1 and an interrupt is generated.
   When an STR/ rising edge is detected and DCR bit 4 is 0, the ACKR_STBR_EV in the auxiliary status register is set to 1.
   The ACKR_STBR_EV bit is cleared by writing 1 into it. If CPU 'level type' interrupt is selected, this operation will also clear the interrupt.
5,6. AFD/ rising or falling edge (PLS):
   Nibble and byte modes.
   When an AFD/ rising or falling edge is detected and the ACKF_AFD_IEN bit in the setup register at offset 0 is 1, the ACKF_AFD_EV bit in the auxiliary status register is set to I and an interrupt is generated.
   When an AFD/ rising or falling edge is detected and the ACKF_AFD_IEN bit in the setup register at offset 0 is 0, the ACKF_AFD_EV bit in the auxiliary status register is set to 1.
   The ACKF_AFD_EV bit is cleared by writing 1 into it. If CPU 'level type' interrupt is selected, this operation will also clear the interrupt.
7. INIT/ falling edge (PLS):
   Compatible, mode.
   When an INIT/ falling edge is detected and the INIT_IEN bit in the setup register at offset 0 is 1, the INIT_EV bit in the auxiliary status register is set to 1 and an interrupt is generated.
   The INIT_EV bit is cleared by writing 1 into it. If CPU 'level type' interrupt is selected, this operation will also clear the interrupt.

## Claims

1. An apparatus (100) including a bidirectional parallel signal interface for coupling to and providing a parallel data interface between a computer and a peripheral device external thereto, wherein said computer operates in a plurality of modes including a host mode where data is communicated from said computer to said peripheral device and a slave mode where data is communicated from said peripheral device to said computer, said parallel signal interface comprising:
an interface circuit (102, 104), including a plurality of registers, for coupling to said computer and communicating thereto and therefrom a plurality of commands and a first plurality of data, wherein said plurality of registers are for receiving, storing and outputting said plurality of commands;
a storage circuit (106), coupled to said interface circuit, for coupling to said peripheral device and communicating thereto and therefrom second and third pluralities of data;
a host mode controller (108), coupled to said interface circuit and said storage circuit, for receiving a first portion of said plurality of commands outputted by said plurality of registers and in accordance therewith controlling said communication of said second plurality of data from said storage circuit to said peripheral device, and for coupling to said peripheral device and communicating thereto and therefrom a first plurality of control signals; and
a slave mode controller (110), coupled to said interface circuit and said storage circuit, for receiving a second portion of said plurality of commands outputted by said plurality of registers and in accordance therewith controlling said communication of said third plurality of data from said peripheral device to said storage circuit, and for coupling to said peripheral device and communicating thereto and therefrom a second plurality of control signals;
**characterised in that** said communication of said second and third pluralities of data between said storage circuit and said peripheral device is effected in accordance with a plurality of data communication rates, and wherein said plurality of data communication rates are controlled by said host and slave mode controllers in accordance with said plurality of commands from said plurality of registers.

2. Apparatus according to claim 1, wherein said storage circuit comprises a first-in, first-out (FIFO) memory.

3. Apparatus according to claim 1, wherein said host mode controller comprises a state machine.

4. Apparatus according to claim 1, wherein said slave mode controller comprises a state machine.

## Patentansprüche

1. Vorrichtung (100) mit einer bidirektionalen parallelen Signalschnittstelle zum Koppeln mit und Vorsehen einer parallelen Datenschnittstelle zwischen einem Computer und einem für diesen externen Peripheriegerät, wobei der Computer in einer Vielzahl von Betriebsarten arbeitet, einschließlich einer Hauptrechner-Betriebsart, in der Daten vom Computer zum Peripheriegerät übertragen werden, und einer Nebenrechner-Betriebsart, in der Daten vom Peripheriegerät zum Computer übertragen werden, wobei die parallele Signalschnittstelle umfasst:
eine Schnittstellenschaltung (102, 104) mit einer Vielzahl von Registern zum Koppeln mit dem Computer und Übertragen einer Vielzahl von Befehlen und einer ersten Vielzahl von Daten zu diesem und von diesem, wobei die Vielzahl von Registern zum Empfangen, Speichern und Ausgeben der Vielzahl von Befehlen dienen;
eine Speicherschaltung (106), die mit der Schnittstellenschaltung gekoppelt ist, zum Koppeln mit dem Peripheriegerät und zum Übertragen einer zweiten und einer dritten Vielzahl von Daten zu diesem und von diesem;
eine Hauptrechner-Betriebsart-Steuereinheit (108), die mit der Schnittstellenschaltung und mit der Speicherschaltung gekoppelt ist, zum Empfangen eines ersten Teils der Vielzahl von Befehlen, die von der Vielzahl von Registern ausgegeben werden, und gemäß diesen Steuern der Übertragung der zweiten Vielzahl von Daten von der Speicherschaltung zum Peripheriegerät und zum Koppeln mit dem Peripheriegerät und Übertragen einer ersten Vielzahl von Steuersignalen zu diesem und von diesem; und
eine Nebenrechner-Betriebsart-Steuereinheit (110), die mit der Schnittstellenschaltung und der Speicherschaltung gekoppelt ist, zum Empfangen eines zweiten Teils der Vielzahl von Befehlen, die von der Vielzahl von Registern ausgegeben werden, und gemäß diesen Steuern der Übertragung der dritten Vielzahl von Daten vom Peripheriegerät zur Speicherschaltung und zum Koppeln mit dem Peripheriegerät und Übertragen einer zweiten Vielzahl von Steuersignalen zu diesem und von diesem;
**dadurch gekennzeichnet, dass** die Übertragung der zweiten und der dritten Vielzahl von Daten zwischen der Speicherschaltung und dem Peripheriegerät gemäß einer Vielzahl von Datenübertragungsraten erfolgt, und wobei die Vielzahl von Datenübertragungsraten von der Hauptrechnerund der Nebenrechner-Betriebsart-Steuereinheit gemäß der Vielzahl von Befehlen von der Vielzahl von Registern gesteuert werden.

2. Vorrichtung nach Anspruch 1, wobei die Speicherschaltung einen Durchlaufspeicher (FIFO-Speicher) umfasst.

3. Vorrichtung nach Anspruch 1, wobei die Hauptrechner-Betriebsart-Steuereinheit eine Zustandsmaschine umfasst.

4. Vorrichtung nach Anspruch 1, wobei die Nebenrechner-Betriebsart-Steuereinheit eine Zustandsmaschine umfasst.

## Revendications

1. Appareil (100) comprenant une interface bidirectionnelle et en parallèle de signaux pour réaliser un couplage sur un ordinateur et un dispositif périphérique qui lui est extérieur et établir une interface de données en parallèle entre eux, dans lequel ledit ordinateur fonctionne dans plusieurs modes comprenant un mode hôte dans lequel des données sont communiquées dudit ordinateur audit dispositif périphérique et un mode esclave dans lequel des données sont communiquées dudit dispositif périphérique audit ordinateur, ladite interface de signaux en parallèle comportant :
un circuit d'interface (102, 104), comprenant une pluralité de registres, pour réaliser un couplage sur ledit ordinateur et communiquer à celui-ci et à partir de celui-ci une pluralité d'ordres et une première pluralité de données, dans lequel ladite pluralité de registres est destinée à recevoir, stocker et délivrer en sortie ladite pluralité d'ordres ;
un circuit de stockage (106) couplé audit circuit d'interface, pour réaliser un couplage sur ledit dispositif périphérique et communiquer à celui-ci et à partir de celui-ci des deuxième et troisième pluralité de données ;
un dispositif de commande (108) du mode hôte, pour coupler audit circuit d'interface et audit circuit de stockage, pour recevoir une première partie de ladite pluralité d'ordres délivrée en sortie par ladite pluralité de registres et, conformément à celle-ci, commander ladite communication de ladite deuxième pluralité de données depuis ledit circuit de stockage audit dispositif périphérique, et pour réaliser un couplage sur ledit dispositif périphérique et communiquer à celui-ci et à partir de celui-ci une première pluralité de signaux de commande ; et
un dispositif de commande (110) du mode esclave, couplé audit circuit d'interface et audit circuit de stockage, pour recevoir une seconde partie de ladite pluralité d'ordres délivrée en sortie par ladite pluralité de registres et, conformément à celle-ci, commander ladite communication de ladite troisième pluralité de données depuis ledit dispositif périphérique audit circuit de stockage, et pour réaliser un couplage sur ledit dispositif périphérique et communiquer à celui-ci et à partir de celui-ci une seconde pluralité de signaux de commande ;
**caractérisé en ce que** ladite communication desdites deuxième et troisième pluralités de données entre ledit circuit de stockage et ledit dispositif périphérique est effectuée conformément à une pluralité de débits de communication de données, et dans lequel ladite pluralité de débits de communication de données est commandée par lesdits dispositifs de commande du mode hôte et du mode esclave conformément à ladite pluralité d'ordres provenant de ladite pluralité de registres.

2. Appareil selon la revendication 1, dans lequel ledit circuit de stockage comporte une mémoire premier entré, premier sorti (FIFO).

3. Appareil selon la revendication 1, dans lequel ledit dispositif de commande du mode hôte comprend une machine d'états.

4. Appareil selon la revendication 1, dans lequel ledit dispositif de commande du mode esclave comprend une machine d'états.
